# DEMANDE DE BREVET EUROPEEN

(11) **EP 3 734 220 A1**
(43) Date de publication de la demande: **04.11.2020**
(21) Numéro de dépôt: 20290023.9
(22) Date de dépôt: 21.02.2020
(51) Int. Cl.: G01B 21/08, B21B 38/04

(54) **INSTALLATION DE MESURE D'ÉPAISSEUR D'UN REVÊTEMENT DE PRODUIT MÉTALLIQUE EN DÉFILEMENT**

(71) Demandeur: Primetals Technologies Austria GmbH, 4031 Linz (AT)
(72) Inventeur: GRENIER, Benjamin, 42600 Savigneux (FR); GOISET, Lionel, 42600 Savigneux (FR)

(57) **Abrégé**

La présente invention décrit une installation de mesure d'épaisseur d'un revêtement de produit métallique (1) en défilement de type bande, comprenant :
- Un bac (B) contenant ledit revêtement sous forme liquide dans lequel est plongé le produit métallique ;
- Un système d'essorage (4) disposé en sortie du produit hors du dit bac et dédié à essorer chaque face du produit de type bande,
- Une traverse (T) de maintien du système d'essorage à une première hauteur (h4) de la surface haute (S) du revêtement liquide dans le bac ;
- Une jauge (5) de type à chaud de mesure d'épaisseur du revêtement disposée dans un espace (h5, h5') situé en aval du système d'essorage ;

L'invention prévoit que la jauge est reliée à la traverse par un organe de maintien (11).

## Description

La presente invention concerne une installation de mesure d'épaisseur d'un revêtement de produit metallique en defilement selon le preambule de la revendication 1.

Dans le domaine de la metallurgie, un dispositif de revêtement de produit metallique en defilement telle qu'une bande d'acier (1) est bien connu.

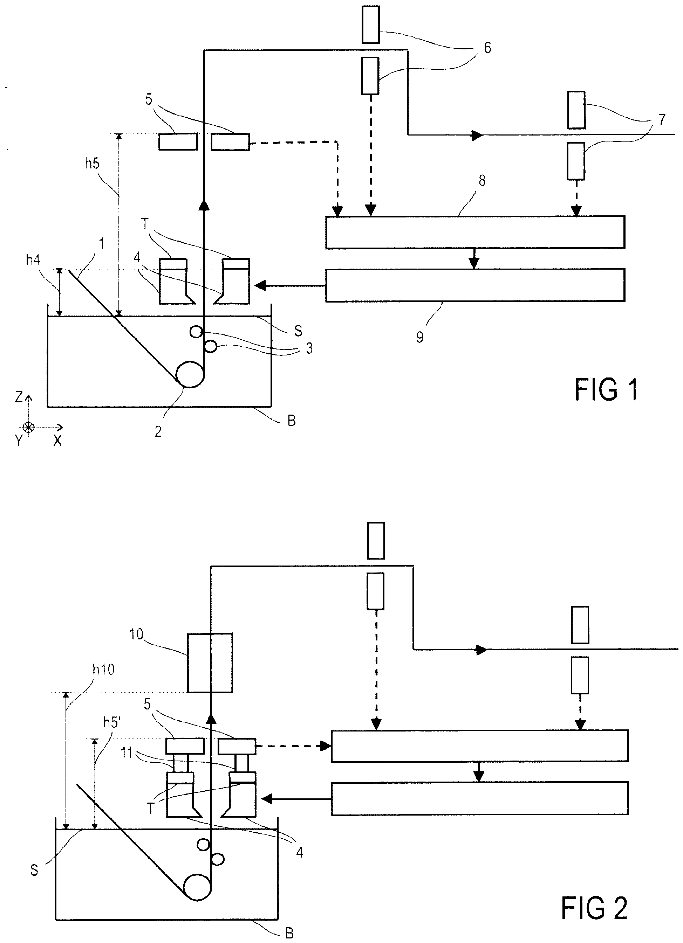

Figure 1 presente ainsi un exemple d'installation de mesure d'épaisseur d'un revêtement de produit metallique en défilement de type bande selon l'état de la technique.

Principalement, le revêtement est prévu dans un bac (B) formant un bain de revêtement (B) sous forme de metal liquide par exemple constitué de zinc, de magnesium, d'aluminium ou autres elements pour former des alliages specifiques. Le produit metallique est alors plonge dans le dit bain au niveau de sa surface (S) de metal liquide, passe sur un rouleau de fond (2) puis entre des rouleaux correcteurs (3) afin de ressortir du bain generalement verticalement (Z) à la surface (S) du bain afin de transiter dans un systeme d'essorage (4) dispose en sortie du produit hors du dit bac et dédié à essorer chaque face du produit de type bande, par exemple sous forme de deux lames d'air disposees transversalement (direction horizontale Y) de part et d'autre de la bande en vis-à-vis de chacune de ses faces. Usuellement, une traverse (T) de maintien du systeme d'essorage est disposee à une premiere hauteur (h4) de la surface haute (S) du revêtement liquide dans le bac. Cette traverse se compose au plus simple de deux poutres pouvant être disposee au-dessus, à côté ou sous chacune des deux lames d'air afin de les maintenir à une distance souhaitee de la bande lors de l'essorage. Ces poutres sont solidarisees à la peripherie du bac et sont amovibles afin de pouvoir ecarter le système d'essorage complet par exemple lors d'une operation de maintenance ou de changement de bande.

En aval du systeme d'essorage, la bande subit ensuite diverses etapes de refroidissement sous une serie de sections de refroidisseurs. Dans certains cas de revêtements specifiques (comme le type ZF mentionne par la suite), la bande subit une etape de rechauffage puis une etape de refroidissements sous une serie de sections comprenant un four suivi par des refroidisseurs.

Afin de pouvoir qualitativement contrôler l'epaisseur du revêtement essore en sortie du systeme d'essorage, plusieurs methodes de mesure de chacune des faces de la bande en defilement existent en aval du système d'essorage :
- Une jauge de mesure d'épaisseur dite à froid (7) est usuellement disposee à environ plus de 70 metres environ de la sortie de bande du bain en aval du système d'essorage ;
- Une jauge de mesure d'épaisseur dite tiede (6) est disposee à plusieurs dizaines de metres environ de la sortie de bande du bain en aval du systeme d'essorage (et disposée usuellement le long de sections de refroidissement);
- Une jauge de mesure d'épaisseur dite à chaud (5) est disposée à plus de 5-6m environ de la sortie de bande du bain en aval du systeme d'essorage : dans la figure 1, la jauge à chaud est ainsi situee à une hauteur (h5) de 5 à 6m de la surface (S) de bain de metal liquide dans le bac (B) ;
- Au moins une, deux ou les trois jauges est ou sont ainsi couplées à une unite de contrôle (8) d'épaisseur du revêtement, la dite unite de contrôle délivrant alors des signaux de regulation de parametres de processus de revêtement, par exemple en ajustant des parametres de positionnement des poutres et leurs lames d'air par rapport à la position ou au profil de la bande defilant au travers.

Selon l'expérience et en raison du defilement continu de la bande, il a été montre que la jauge dite à chaud (5) est primordiale, car etant la plus proche du systeme d'essorage, elle permet avantageusement une mesure d'épaisseur très tôt en aval du systeme d'essorage en comparaison des autres jauges dites tiede ou à froid (6, 7) bien plus éloignées qui délivrent à l'unité de contrôle (8) des informations qualitatives tardives sur une portion de bande revêtue, avec le risque que cette portion déjà revêtue soit ainsi hörs tolerance et donc consideree comme inutilisable pour garantir un niveau de qualite de revêtement exige par un client.

Actuellement, selon un systeme connu, chaque jauge dite à chaud est maintenue par un bras horizontal (non represente) de plus d'un mètre de long et dispose transversalement (selon axe Y) à environ 6m au-dessus de la surface (S) afin de maintenir la jauge en vis-à-vis de chaque face de bande à environ quelques mm voire cm de ladite face de bande (de largeur typique entre 50cm et 2m). Ce bras est toutefois soumis à des effets mecano-thermiques qui engendrent des deformations mecaniques du dit bras pouvant venir introduire des erreurs de mesures voire même au pire des situations de mise en contact avec la bande revêtue en defilement. Ce bras comporte generalement un actuateur qui lui permet de venir retracter la jauge à chaud hors de l'espace de defilement vers un côté où agissent des opérateurs sur une passerelle haute où il est possible d'effectuer une recalibration de la jauge sur un echantillon etalonne.

Dans les plus recentes installations de revêtement, il est possible de prevoir divers types de revêtement, par exemple dans le domaine de la galvanisation d'une bande metallique au moyen d'un bain de metal liquide de type Z comprenant majoritairement du zinc, de type ZM (comprenant en particulier du zinc, de l'aluminium, du magnesium), d'un bain de type ZF (comprenant en particulier du zinc, du fer et connu sous la technologie « Galvanneal »), ou d'autres types de bains de métal liquide. A cet effet, deux bacs de revêtement peuvent être prévus de maniere interchangeable, chacun rempli d'un des deux types de revêtement. Lors d'un changement de bac, les equipements immergés (rouleau de fond et rouleaux correcteurs) et le systeme d'essorage sont alors retires hors ou/et au-dessus d'un premier bac pour être replaces dans ou/et au-dessus d'un second bac. Cette manœuvre presente deux inconvenients :
- Un retrait des equipements et du système d'essorage necessite un espace libre suffisant pour une manoeuvre par exemple au moyen d'un moyen de levage au-dessus du bac, en particulier sous une hauteur avoisinant jusqu'à 4 à 6m. Il est ainsi necessaire de completement retracter la jauge à chaud, son bras de maintien et eventuellement la passerelle associee hors de cet espace de manœuvre, ce qui est une opération supplementaire à prevoir ;
- Enfin, dans le cas de certains types de revêtement, il est prévu de devoir venir disposer un four complementaire à une hauteur d'environ 5-6m au-dessus de la surface du bain. C'est le cas par exemple d'un revêtement de type ZF. Ce four complémentaire vient alors gêner la disposition de la jauge à chaud à cette hauteur. Même si la jauge est disposee proche au-dessous du four complementaire, elle subit aussi des effets thermiques indesirables, sachant que son domaine de fonctionnement exige une plage limitee de temperature, il est ainsi nécessaire de prevoir de lourds equipements de refroidissement de la dite jauge à chaud.

Un but de la presente invention est de proposer une installation de mesure d'épaisseur d'un revêtement de produit metallique en defilement munie d'au moins une jauge, en particulier de type « à chaud », de mesure d'épaisseur du revêtement disposee dans un espace situe en aval du systeme d'essorage qui permet de resoudre les problemes precites.

Il est ainsi propose une installation de mesure d'épaisseur d'un revêtement de produit metallique en defilement de type bande au travers des caracteristiques de la revendication 1.

A partir d'une installation de mesure d'épaisseur d'un revêtement de produit metallique en defilement de type bande, comprenant :
- Un bac contenant ledit revêtement sous forme liquide dans lequel est plonge le produit metallique ;
- Un systeme d'essorage dispose en sortie du produit hors du dit bac et dédié à essorer chaque face du produit de type bande,
- Une traverse de maintien du systeme d'essorage à une première hauteur de la surface haute du revêtement liquide dans le bac ;
- Une jauge de mesure d'épaisseur du revêtement disposee dans un espace situe en aval du systeme d'essorage ;
l'invention prevoit que la jauge est reliee à la traverse par un organe de maintien.

L'organe de maintien peut alors être dimensionne suffisamment compact afin que le jauge de type « à chaud » soit avantageusement plus proche du systeme d'essorage que d'un four complémentaire pour un revêtement specifique (par exemple de type ZF) dispose à quelques metres en sortie du Système d'essorage. Il est ainsi possible d'éviter une gêne spaciale et thermique dudit four sur la disposition de la jauge à environ 5-6m de hauteur au-dessus de la surface de bain de metal liquide dans le bac.

L'organe de maintien etant dimensionne plus compact que le bras initial de maintien de la jauge à chaud disposee à 5-6m de hauteur comme decrite dans l'état de l'art presente, il est ainsi plus robuste que ledit bras contre des effets thermiques avoisinants (chauffage(s) locaux, temperature haute de bain de metal de liquide...).

Lors de retrait des equipements immerges (rouleau de fond et rouleaux correcteurs) et le système d'essorage, la jauge est solidairement retiree avec dits équipements, ce qui simplifie donc une etape de maintenance où le retrait de la jauge à chaud était plus complexe.

Un ensemble de sous-revendications presente egalement des avantages de l'invention.

Un exemple de realisation et d'applications avantageuses est fourni à l'aide de la figure decrite :
- Figure 2: Exemple d'installation de mesure d'épaisseur d'un revêtement de produit metallique en defilement de type bande selon l'invention.

Sur le même principe que figure 1, la figure 2 presente un exemple d'installation de mesure d'épaisseur d'un revêtement de produit metallique (1) en defilement de type bande, comprenant :
- Un bac (B) contenant ledit revêtement sous forme liquide dans lequel est plonge le produit metallique ;
- Un systeme d'essorage (4) dispose en sortie du produit hors du dit bac et dédié à essorer chaque face du produit de type bande,
- Une traverse (T) de maintien du systeme d'essorage à une premiere hauteur (h4) de la surface haute (S) du revêtement liquide dans le bac ;
- Une jauge (5) de type à chaud de mesure d'épaisseur du revêtement disposee dans un espace - c'est-à-dire une hauteur (h5, h5') de la surface haute (S) du revêtement liquide dans le bac -situe en aval du système d'essorage ;
A la difference de la figure 1, la jauge à chaud est avantageusement reliee à la traverse par un organe de maintien (11).

Grâce au dimensionnement réduit de l'organe de maintien, la jauge peut ainsi être disposee à une deuxieme hauteur (h5') avantageusement de moins de 5 à 6m de la surface haute du revêtement liquide dans le bac, idealement entre 1m ou 4m en fonction des encombrements verticauxdu systeme d'essorage.

La jauge peut egalement être mobile par rapport à la traverse, idealement en prevoyant un simple rail transversal dispose sur la traverse (ou parallelement à la traverse) et chariotant l'organe de maintien et/ou la jauge. Il est ainsi possible de mesurer plusieurs zones transversales de bande de maniere simple. A cet effet, la jauge peut de maniere plus generale délivrer une mesure ponctuelle, lineaire sur un axe transversal au defilement du produit ou surfacique sur une portion de face de produit. Enfin, l'organe de maintien peut être prévu mobile en 2D ou 3D en ce qu'il permet de mouvoir la jauge par rapport à la traverse. Tous ces aspects de mobilite permettent avantageusement que l'organe de maintien puisse fort simplement deplacer la jauge entre une position de travail et une position de calibration, idealement pour amener la jauge face à un echantillon de calibration (qui peut être egalement dispose sur la traverse).

Un systeme de stabilisation du produit dans un plan vertical peut optionnellement être intercale entre le système d'essorage et la jauge, idealement le systeme de stabilisation etant aussi simplement maintenu à la traverse. De la sorte, la bande en sortie du systeme de stabilisation permet un meilleur maintien de bande exactement entre les deux jauges à chaud de part et d'autre de la bande. Un contact d'un des jauges à chaud avec la bande est ainsi avantageusement mieux évité.

Plus spécifiquement sur la technologie adoptee, la jauge peut comprendre au moins une jauge de mesure par fluorescence de rayons X, une camera thermique, ou un autre capteur apte à mesurer une epaisseur de revêtement, et optionnellement un capteur additionnel de distance et/ou un capteur additionnel de profil transversal.

Il est à noter que la jauge à chaud peut être munie d'un systeme de refroidissement qui peut aussi être simplement integré à la traverse.

Il est preferable de dimensionner l'organe de maintien de maniere compacte, c'est pourquoi l'expérience montre qu'il doit avoir une envergure inferieure à 2m en particulier pour sa hauteur, et idealement inferieure à 1m, en particulier si aucun système de stabilisation du produit n'est prévu entre le systeme d'essorage et la jauge à chaud.

## Revendications

1. Installation de mesure d'épaisseur d'un revêtement de produit metallique (1) en defilement de type bande, comprenant :
- Un bac (B) contenant ledit revêtement sous forme liquide dans lequel est plonge le produit metallique ;
- Un systeme d'essorage (4) dispose en sortie du produit hors du dit bac et dédié à essorer chaque face du produit de type bande,
- Une traverse (T) de maintien du système d'essorage à une première hauteur (h4) de la surface haute (S) du revêtement liquide dans le bac ;
- Une jauge (5) de mesure d'épaisseur du revêtement disposee dans un espace (h5, h5') situe en aval du systeme d'essorage ;
**caracterisee en ce que** la jauge est reliee à la traverse par un organe de maintien (11).

2. Installation selon revendication 1, pour laquelle la jauge est disposee à une deuxieme hauteur (h5') de moins de 6m de la surface haute du revêtement liquide dans le bac, idealement entre 1m ou 4m en fonction des encombrements verticaux du système d'essorage.

3. Installation selon une des revendications 1 à 2, pour laquelle la jauge est mobile par rapport à la traverse, idealement en prevoyant un rail transversal dispose sur la traverse et chariotant l'organe de maintien et/ou la jauge.

4. Installation selon une des revendications 1 à 3, pour laquelle la jauge délivre une mesure ponctuelle, linéaire sur un axe transversal au defilement du produit ou surfacique sur une portion de face de produit.

5. Installation selon une des revendications 1 à 4, pour laquelle l'organe de maintien est mobile en 2D ou 3D en ce qu'il permet de mouvoir la jauge par rapport à la traverse.

6. Installation selon une des revendications 1 à 5, pour laquelle l'organe de maintien deplace la jauge entre une position de travail et une position de calibration, idealement pour amener la jauge face à un echantillon de calibration.

7. Installation selon une des revendications 1 à 6, pour laquelle la jauge comprend au moins une jauge de mesure par fluorescence de rayons X, une camera thermique, ou un autre capteur apte à mesurer une epaisseur de revêtement, et optionnellement un capteur additionnel de distance et/ou un capteur additionnel de profil transversal.

8. Installation selon une des revendications 1 à 7, pour laquelle un systeme de stabilisation du produit dans un plan vertical est intercalé entre le systeme d'essorage et la jauge, idéalement le systeme de stabilisation etant maintenu à la traverse.

9. Installation selon une des revendications 1 à 8, pour laquelle la jauge est munie d'un systeme de refroidissement.

10. Installation selon une des revendications 1 à 9, pour laquelle l'organe de maintien a une envergure inferieure à 2m, idealement inferieure à 1m.

## Revendications modifiées

### Revendications modifiées conformément à la règle 137(2) CBE.

1. Installation de mesure d'épaisseur d'un revêtement de produit métallique (1) en défilement de type bande, comprenant :
- Un bac (B) contenant ledit revêtement sous forme liquide dans lequel est plongé le produit métallique ;
- Un système d'essorage (4) disposé en sortie du produit hors du dit bac et dédié à essorer chaque face du produit de type bande,
- Une traverse (T) de maintien du système d'essorage à une première hauteur (h4) de la surface haute (S) du revêtement liquide dans le bac ;
- Une jauge (5) de mesure d'épaisseur du revêtement disposée dans un espace (h5, h5') situé en aval du système d'essorage ;
**caractérisée en ce que** la jauge est reliée à la traverse par un organe de maintien (11).

2. Installation selon revendication 1, pour laquelle la jauge est disposée à une deuxième hauteur (h5') de moins de 6m de la surface haute du revêtement liquide dans le bac, idéalement entre 1m ou 4m en fonction des encombrements verticaux du système d'essorage.

3. Installation selon une des revendications 1 à 2, pour laquelle la jauge est mobile par rapport à la traverse, idéalement en prévoyant un rail transversal disposé sur la traverse et chariotant l'organe de maintien et/ou la jauge.

4. Installation selon une des revendications 1 à 3, pour laquelle la jauge délivre une mesure ponctuelle, linéaire sur un axe transversal au défilement du produit ou surfacique sur une portion de face de produit.

5. Installation selon une des revendications 1 à 4, pour laquelle l'organe de maintien est mobile en 2D ou 3D en ce qu'il permet de mouvoir la jauge par rapport à la traverse.

6. Installation selon une des revendications 1 à 5, pour laquelle l'organe de maintien déplace la jauge entre une position de travail et une position de calibration, idéalement pour amener la jauge face à un échantillon de calibration.

7. Installation selon une des revendications 1 à 6, pour laquelle la jauge comprend au moins une jauge de mesure par fluorescence de rayons X, une caméra thermique, ou un autre capteur apte à mesurer une épaisseur de revêtement, et optionnellement un capteur additionnel de distance et/ou un capteur additionnel de profil transversal.

8. Installation selon une des revendications 1 à 7, pour laquelle un système de stabilisation du produit dans un plan vertical est intercalé entre le système d'essorage et la jauge, idéalement le système de stabilisation étant maintenu à la traverse.

9. Installation selon une des revendications 1 à 8, pour laquelle la jauge est munie d'un système de refroidissement.

10. Installation selon une des revendications 1 à 9, pour laquelle l'organe de maintien a une envergure inférieure à 2m, idéalement inférieure à 1m.

11. Installation selon une des revendications 1 à 10, pour laquelle la jauge, en particulier une jauge de type jauge à chaud ou de type d'au moins un capteur de mesure de profil de bande, émet un signal de régulation dynamique afin de régler des paramètres de fonctionnement de lames d'air, en particulier un profil de flux d'air transversal sortant d'au moins une lèvre de lame d'air.

12. Installation selon revendication 11, pour laquelle la lame d'air comprend une ouverture de lèvre déformable selon un profil réglable transversalement.
